# EUROPÄISCHE PATENTSCHRIFT

(11) **EP 0 361 002 B1**
(45) Veröffentlichungstag und Bekanntmachung des Hinweises auf die Patenterteilung: **30.06.1993**
(21) Anmeldenummer: 89113375.3
(22) Anmeldetag: 20.07.1989
(51) Int. Cl.: C05F 17/02

(54) **Behälter, insbesondere Kompostbehälter**
Container, especially a compost container
Récipient, notamment pour compost

(30) Priorität: 27.09.1988 DE 8812192 U
(43) Veröffentlichungstag der Anmeldung: 04.04.1990
(73) Patentinhaber: M. Schmidt GmbH Recycling-Anlagen-Management, W-8150 Holzkirchen (DE)
(72) Erfinder: Levermann, Martin, D-8336 Malgersdorf (DE)
(74) Vertreter: Patentanwälte Dr. Solf & Zapf

(56) Entgegenhaltungen:
- DE-A- 2 706 485
- DE-U- 8 301 309
- DE-U- 8 713 945
- FR-A- 2 156 335

## Beschreibung

Die Erfindung bezieht sich auf einen Behälter nach dem Oberbegriff des Anspruchs 1.

Ein Behälter dieser Art ist im DE-GM 83 01 309 beschrieben und zeichnerisch dargestellt. Bei dieser bekannten Ausgestaltung werden die Fertigbauteile rechtwinklig zueinander und in vertikaler Anordnung ihrer Breitseiten mit ihren Ausnehmungen kammförmig ineinander gesteckt, wobei jeweils zueinandergehörige Ausnehmungsseitenflächen den Verbindungssteg des benachbarten Fertigbauteils gabelförmig mit einem Bewegungsspiel übergreifen, so daß sie wahlweise wieder voneinander abgehoben werden können.

In Fällen, in denen eine etwa durchgehende Umfangskante am oberen und/oder unteren Behälterrand gewünscht ist, werden vorzugsweise zwei Arten von Fertigbauteilen verwendet, von denen die eine Art die Ausnehmungen nur in einer Schmalseitenfläche aufweist, während die andere Art die Ausnehmungen in beiden einander gegenüberliegenden Schmalseitenflächen aufweist.

Aufgrund des jeweils gabelförmigen Übergreifens der Verbindungsstege des benachbarten Fertigbauteils erhält der Aufbau des Behälters eine stabile Konstruktion von im horizontalen Querschnitt viereckiger Form.

Der Erfindung liegt die Aufgabe zugrunde, einen Behälter der eingangs angegebenen Bauart so auszugestalten, daß eine von der viereckigen Form abweichende Form verwirklicht werden kann.

Diese Aufgabe wird durch die kennzeichnenden Merkmale des Anspruchs 1 gelöst.

Bei der erfindungsgemäßen Ausgestaltung können einander jeweils vertikal benachbarte Fertigbauteile in wenigstens einer Stellung zueinander zusammengesteckt werden, in der sie innenseitig einen Winkel einschließen, der etwa gleich oder größer ist als 90°. Es können somit wahlweise viereckige Querschnittsformen mit quadratischem bzw. rechteckigem und schiefwinkligem Querschnitt oder auch mit sechs- oder achteckigem Querschnitt verwirklicht werden. Bei der erfindungsgemäßen Ausgestaltung sind durch die gegenüber den Verbindungsstegen dünner bemessenen Verbindungsstegteile seitlich der Verbindungsstege Verjüngungen, Hinterschneidungen bzw. Freiräume in den Breitseitenflächen vorgesehen, in denen die Ränder der jeweils benachbarten Ausnehmung eintauchen können. Dies ermöglicht die erfindungsgemäße Anordnung der Fertigbauteile zueinander in von einem rechten Winkel abweichenden Stellungen wodurch gewünschte Querschnittsformen des Behälters verwirklicht werden können. Dabei leidet keineswegs die Stabilität des Behälters bzw. dessen Aufbaus, weil der gabelförmige Übergriff zueinandergehöriger Ausnehmungsränder über den zugehörigen Verbindungssteg aufrechterhalten bleibt. Das für eine leichte Montage bzw. Demontage jeweils erforderliche Bewegungsspiel kann dabei den jeweiligen Wünschen angepaßt werden.

Im Rahmen der Erfindung ist es möglich, die Ausgestatung so zu treffen, daß in einem gewissen Winkelbereich eine Steckverbindung entsteht, die um die Vertikalachse der zugehörigen Ausnehmung und des zugehörigen Verbindungsstegs stufenlos drehbar ist oder die in Winkelstufen zusammengesetzt werden kann.

Weitere vorteilhafte Weiterbildungen der Erfindung, die bei Gewährleistung einer einfachen kostengünstig herstellbaren Bauweise zu vorteilhaften Bauformen bei Gewährleistung einer stabilen und sicheren Steckverbindung führen, sind in den weiteren Unteransprüchen beschrieben.

Es ist zwar aus der GB-PS 13 39 521 und aus dem DE-GM 83 20 588 an sich bekannt, zwei Fertigbauteile eines Kompostbehälters durch Gelenke horizontal drehbar miteinander zu verbinden, jedoch sind bei diesen völlig anderen Ausgestaltungen zusätzliche Gelenkbolzen notwendig und/oder es ergeben sich auch unterschiedliche Formen für die Fertigbauteile.

Nachfolgend wird die Erfindung anhand von in einer Zeichnung dargestellten, bevorzugten Ausführungsbeispielen näher erläutert . Es zeigt:
- Fig. 1: ein erfindungsgemäß ausgestaltetes Fertigbauteil in der Vorderansicht;
- Fig. 2: das Fertigbauteil in der Draufsicht;
- Fig. 3: zwei Ferigbauteile während des Zusammensteckens zu einem Aufbau für einen Kompostbehälter in perspektivischer Darstellung;
- Fig. 4: den aus Fertigbauteilen zusammengesetzten Kompostbehälter in perspektivischer Darstellung.
- Fig. 5: ein Endteil eines Fertigbauteils in abgewandelter Ausgestaltung.

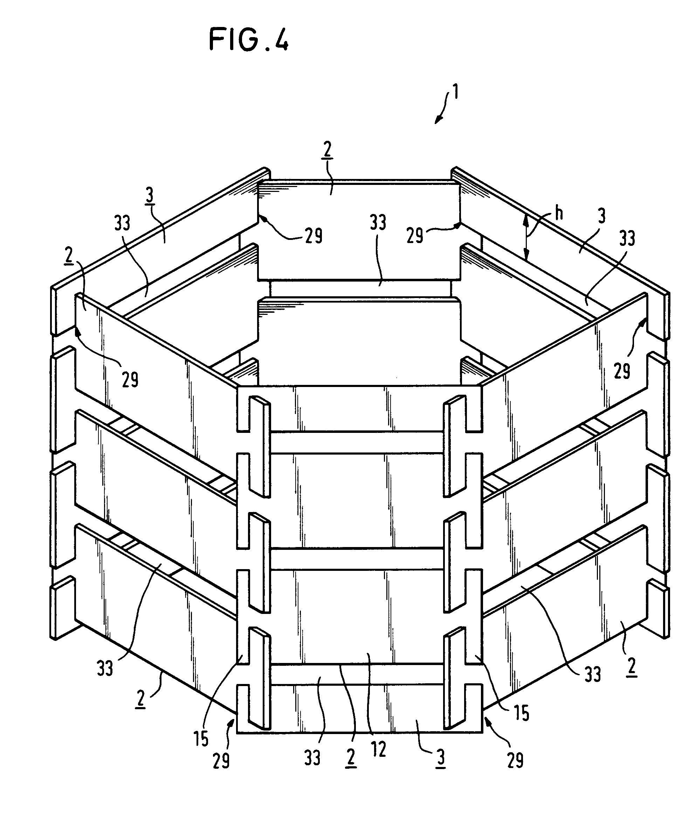

Der in Fig. 4 dargestellte und mit 1 bezeichnete Kompostbehälter ist von sechseckigem horizontalem Querschnitt und weist somit sechs Seitenwände auf, die durch vertikales Ineinanderstecken von zwei Arten von einteiligen Fertigbauteilen 2,3 gebildet sind. Die beiden Arten Fertigbauteile 2,3 sind prinzipiell gleich. Die mit 3 bezeichneten Ausgleichs-Fertigbauteile unterscheiden sich lediglich durch eine geringere Höhe h als die Höhe H der mit 2 bezeichneten Haupt-Fertigbauteile, und sie dienen als Füllstücke, die eine etwa gleich hohe Ober- und/oder Unterkante des Behälters 1 ermöglichen. Vorzugsweise entsprechen die Ausgleichs-Fertigbauteile 3 in ihrer Form und Größe einem mittig in der Längsachse geteilten Haupt-Fertigbauteil 2 (h=H/2). Wegen der im wesentlichen prinzipiell gleichen Ausgestaltung der Fertigbauteile 2,3 wird im Folgenden lediglich ein mit 2 bezeichnetes HauptFertigbauteil beschrieben.

Von den einander gleichen Fertigbauteilen 2 ist bei der vorliegenden Ausgestaltung das Fertigbauteil 2 in Form eines viereckigen Brettes geformt und zwar viereckig sowohl mit Blick auf seine Breitseite, auf seine Schmalseite und auch auf seine Stirnseite.

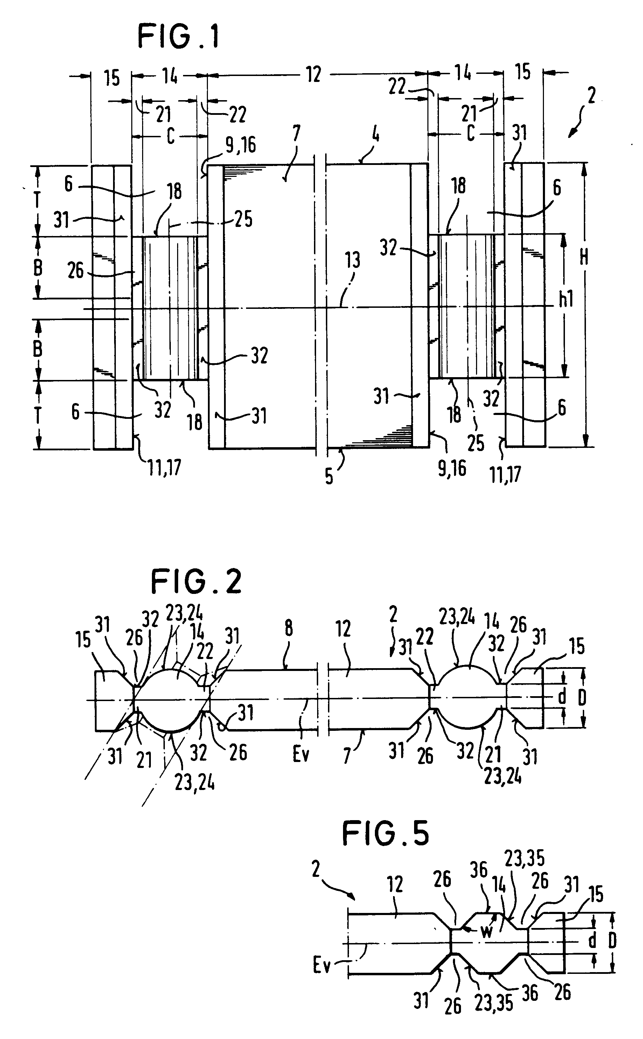

Das einteilige Fertigbauteil 2 weist in seinen Endbereichen von seiner Oberseite 4 und Unterseite 5 ausgehende, einander vertikal gegenüberliegende Ausnehmungen 6 viereckigen bzw. rechteckigen Querschnitts auf, die sich bezüglich der Innenseite 7 und der Außenseite 8 des Fertigbauteils 3 in Form eines Schlitzes durchgehend erstrecken. Die inneren Ausnehmungsränder sind jeweils mit 9 und die äußeren Ausnehmungsränder jeweils mit 11 bezeichnet. Wie Figur 1 deutlich zeigt, besteht das Fertigbauteil 2 in einteiliger Bauweise aus einem Längs-Mittelteil 12, zwei sich daran stirnseitig und mittig zur Längs-Mittelachse 13 anschließenden Verbindungsstegen 14, deren Höhe h1 kleiner bemessen ist, als die Höhe H des Längs-Mittelteils 12, und zwei sich endseitig an den Verbindungsstegen 14 anschließenden Hakenstegen 15, deren Höhe der Höhe H des Längs-Mittelteils 12 bzw. des Fertigbauteils 2 entspricht. Die Ausnehmungen 6 sind somit horizontal gesehen auf ihren einander zugewandten Seiten durch das Längs-Mittelteil 12 begrenzt, während sie auf ihren einander abgewandten Seiten durch die Hakenstege 15 begrenzt sind. Die inneren und äußeren Seitenflächen der Ausnehmungen 6 sind mit 16 und 17 bezeichnet. Der Ausnehmungsgrund ist jeweils mit 18 bezeichnet und wird jeweils durch den zugehörigen Verbindungssteg 14 gebildet.

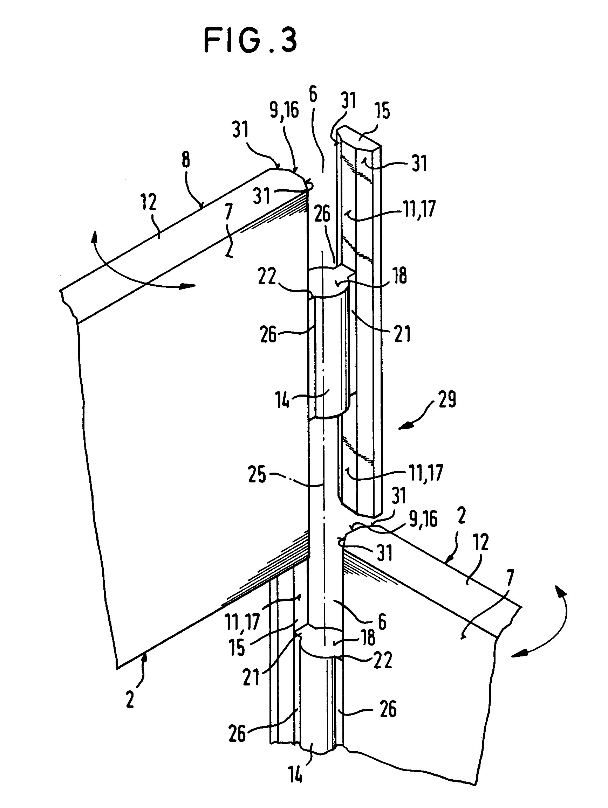

Längs der Längs-Mittelachse 13 gesehen, sind zu beiden Seiten der Verbindungsstege 14 Verbindungsstegteile 21,22 angeordnet, die sich bei der vorliegenden Ausgestaltung über die gesamte Höhe h1 der Verbindungsstege 14 erstrecken und deren Dicke d dünner bemessen ist, als die Dicke D der Verbindungsstege 14, die hier der Dicke des Fertigbauteils 2 entspricht. Da die Verbindungsstege 14 zu beiden Seiten zu den Verbindungsstegteilen 21,22 hin konvergieren, ergeben sich mit 23 bezeichnete konvergierende Flanken, die bei der vorliegenden bevorzugten Ausgestaltung Teile von zylindrischen Krümmungsflächen 24 sind, die um die mit 25 bezeichnete Querachse beider übereinanderliegender Ausnehmungen 6 eines Endes des Fertigbauteils 2 gekrümmt sind. Die Verbindungsstege 14 werden somit durch sich vertikal erstreckende zylindrische Zapfen gebildet, die sich zwischen den Verbindungsstegteilen 21,22 erstrecken. Die in ihrer Dicke d verjüngten Verbindungsstegteile 21,22 bilden vertikal vorzugsweise durchgehende Ausnehmungen oder Nuten 26 zu beiden Seiten der Verbindungsstege 14 bzw. zylindrischen Zapfen und zwar sowohl auf der Innen- als auch Außenfläche 7,8. Durch diese Nuten 26 werden zu beiden Seiten der Verbindungsstege 14 Freiräume geschaffen, die es ermöglichen, zwei mit ihren Ausnehmungen 6 ineinander gesteckte Fertigbauteile 2 oder 2 und 3 um die zugehörige vertikale Querachse 25 zu verschwenken, wobei die jeweiligen Ausnehmungsränder 9,11 in die Nuten 26 eintauchen können. Je nach Größe der Nuten 26 ergibt sich hierdurch eine horizontale Bewegungsfreiheit, wodurch eine in Fig. 3 allgemein mit 29 bezeichnete drehbare bzw. anpaßbare Steckverbindung geschaffen ist.

Insbesondere in solchen Fällen, wenn die Dicke D des Verbindungssteges 14 etwa der Dicke des Fertigbauteils 2 entspricht, ist es zwecks Vergrößerung des Schwenkbereichs vorteilhaft, die äußeren und inneren Ausnehmungsränder 9,11 durch Schrägflächen 31 stark anzufasen. Berücksichtigt man, daß die Fertigbauteile 2 untereinander gleich ausgebildet sind, ergibt sich hierdurch eine beträchliche Schwenkbereichvergrößerung, wobei zwei ineinander gesteckte Fertigbauteile 2 oder 2 und 3 um die zugehörige vertikale Querachse 25 soweit verschwenkt werden können, bis die einander zugewandten Schrägflächen 31 gegeneinanderstoßen. Bei der vorliegenden Ausgestaltung lassen sich wahlweise quadratische, sechseckige oder achteckige Querschnittsformen des Kompostbehälters 1 dadurch verwirklichen, daß die Fertigbauteile 2 in entsprechender Winkelanordnung zueinander zusammengesteckt werden. Zwecks Verdeutlichung der Steckverbindung ist in Fig. 2 ein zugehöriges Fertigbauteil 2 oder 3 andeutungsweise in einer Position dargestellt, in der zwischen den Fertigbauteilen 2 innenseitig ein stumpfer Winkel w von 120° oder 135° eingeschlossen ist. Da bei der vorliegenden Ausgestaltung die verjüngten Verbindungsstegteile 21,22 auf beiden Seiten der Verbindungsstege 14 vorgesehen sind, lassen sich auch schiefwinklige Formen für den Kompostbehälter verwirklichen und die Innen- und Außenseiten der Fertigbauteile 2, 3 sind einander gleich, so daß es bei der Montage keiner Unterscheidung von Innen- und Außenseiten bedarf.

Um ein leichtes Aufstecken und wieder Abnehmen der Fertigbauteile 2,3 zu ermöglichen, ist die Breite C der Ausnehmungen 6 etwas größer bemessen, als die Dicke D der Verbindungsstege 14 bzw. Zapfen. Um das Fertigbauteil 2,3 im Bereich der zu beiden Seiten angeordneten Nuten 26 nicht zu sehr zu schwächen, laufen die Nuten 26 in ihrem Grund nicht spitz zu, sondern es sind zur vertikalen Längs-Mittelebene E parallel verlaufende Nutgrundflächen 32 vorgesehen, die sich bei der vorliegenden Ausgestaltung ausgehend von den Krümmungsflächen 24 bis zu den von den Seitenflächen 16,17 der Ausnehmungen 6 und den Schrägflächen 31 gebildeten Ecken erstrecken.

Die Höhe h1 der Verbindungsstege 14 ist gleich oder größer bemessen als die halbe Höhe H des Fertigbauteils 2. Vorzugsweise ist h1 etwas größer als H/2, so daß im zusammgesteckten Zustand bei Anlage der zugehörigen Nutgrundflächen 18 aneinander ein Abstand zwischen den einander zugewandten Ober- und Unterseiten 4,5 der Fertigbauteile 2 besteht. Hierdurch ergeben sich im zusammengebauten Zustand konstruktiv vorgegebene horizontale Spalte 33 im Behälter 1, durch die für das Kompostieren erforderliche Luft in den Kompost eintreten kann.

Bei der vorbeschriebenen Ausgestaltung erstrecken sich die durch die verjüngten Längs-Mittelstegteile 21,22 gebildeten Nuten 26 über die gesamte Höhe h1 der Verbindungsstegteile 21,22 bzw. Höhe H des Fertigbauteils 2 , wobei die Höhe 1 insbesondere größer ist als die doppelte Tiefe der Ausnehmung 6, wodurch sich Belüftungsspalte zwischen den aufeinandergesetzten Fertigbauteilen 2, 3 ergeben. Unbedingt erforderlich sind die Nuten 26 in den mit B bezeichneten Bereichen, in denen sich im zusammengesteckten Zustand die Ausnehmungsränder 9,11 erstrecken.

Im vorbeschriebenen Sinne ist auch die andere Art des einteiligen Fertigbauteils 3 ausgebildet.

Wie die Figuren 1 und 2 deutlich zeigen, sind die Fertigbauteile 2,3 bezüglich ihrer vertialen Längs-Mittelebene Ev symmetrisch geformt. Abgesehen von den Fertigbauteilen 3 sind auch die Fertigbauteile 2 bezüglich der horizontalen Längs-Mittelachse 13 symmetrisch geformt.

Die Fertigbauteile 2,3 bestehen aus Kunststoff, und sie sind durch Spritzgießen oder Preßformen hergestellt. Vorzugsweise bestehen die Fertigbauteile 2,3 aus wiederverwendbarem bzw. recycelten Altkunststoff. Durch die Verwendung von Altkunststoff ist eine preiswerte Herstellung und lange Lebensdauer gewährleistet.

Das Ausführungsbeispiel nach Fig. 5 unterscheidet sich vom vorbeschriebenen dadurch, daß die Verbindungsstege 14 innen- und außenseitig anstelle von Krümmungsflächen 24 prismatische Flächen aufweisen, wobei die Flanken 23 der Verbindungsstege 14 durch Schrägflächen 35 gebildet sind, die mit vorzugsweise vorhandenen Seitenflächen 36, die insbesondere in der Ebene der Innenfläche 7 und Außenfläche 8 liegen, stumpfe Winkel w von etwa 120° und/oder 135° bilden. Bei dieser Ausgestaltung ist dann ein Drehen der Steckverbindung 29 um die Querachse 25 nicht möglich, wenn die Seitenflächen 16,17 der Ausnehmung 6 die Schrägflächen 35 mit geringem Bewegungsspiel übergreifen.

## Patentansprüche

1. Behälter, gegebenenfalls mit einem Boden und einem Deckel, insbesondere Kompostbehälter, bestehend aus einer Mehrzahl brettförmiger horizontal angeordneter Fertigbauteile, die jeweils im Endbereich zwei jeweils von derselben Schmalseitenfläche ausgehende, sich etwa rechtwinklig zur Längsachse des Fertigbauteils erstreckende, sowie von seiner Innenfläche bis zu seiner Außenfläche durchgehende Ausnehmungen aufweisen, die auf ihren vertikalen, einander zugewandten Seiten durch ein Längs-Mittelteil des Fertigbauteils sowie auf ihren vertikalen, einander abgewandten Seiten durch Hakenstege begrenzt sind, und deren Tiefe durch die Hakenstege mit dem Längs-Mittelteil verbindende Verbindungsstege begrenzt ist, und deren Breite so groß bemessen ist, daß das Fertigbauteil mit jeweils einer Ausnehmung in die zugehörige Ausnehmung eines oberseitig oder unterseitig benachbarten, sich quer erstreckenden Fertigbauteils des Behälter-Aufbaus kammartig einsteckbar ist, wobei am oberen und unteren Umfangsrand des Behälters vorzugsweise eine erste Art Fertigbauteile mit von den oberen und unteren Schmalseitenflächen ausgehenden Ausnehmungen und eine zweite Art Fertigbauteile mit von der oberen oder unteren Schmalseitenfläche ausgehenden Ausnehmungen in Umfangsrichtung abwechselnd angeordnet sind,
**dadurch gekennzeichnet,**
daß jeweils zwischen dem Verbindungssteg (14) und dem Längs-Mittelteil (12) einerseits sowie zwischen dem Verbindungssteg (14) und dem Hakensteg (15) andererseits vorzugsweise sich über die gesamte Höhe (h1) des Verbindungsstegs (14) erstreckende Verbindungsstegteile (21,22) angeordnet sind, deren Dicke (d) geringer ist als die Dicke (D) des Verbindungsstegs (14).

2. Behälter nach Anspruch 1,
**dadurch gekennzeichnet,**
daß die Verbindungsstegteile (21, 22) durch ihnen zugewandte, konvergierende Flanken (23) des Verbindungstegs (14) gebildet sind.

3. Behälter nach Anspruch 2,
**dadurch gekennzeichnet,**
daß die den Verbindungsstegteilen (21,22) zugewandten Flanken (23) des Verbindungsstegs (14) zylinderabschnittförmige Krümmungsflächen (24) oder prismatische Schrägflächen (35) sind.

4. Behälter nach einem oder mehreren der Ansprüche 1 bis 3,
**dadurch gekennzeichnet,**
daß die Dicke (d) der Verbindungsstegteile (21,22) dünner ist als die Dicke (D) des Längs-Mittelteils (12) und Hakenstegs (15).

5. Behälter nach einem oder mehreren der Ansprüche 1 bis 4,
**dadurch gekennzeichnet,**
daß die Dicke (D) des Verbindungsstegs (14) bzw. der durch dessen Krümmungsflächen (24) vorgegebene Durchmesser der Dicke des Fertigbauteils (2,3) entspricht.

6. Behälter nach einem oder mehreren der Ansprüche 1 bis 5,
**dadurch gekennzeichnet,**
daß das Längs-Mittelteil (12) an seinen Enden bzw. in den Übergangsbereichen zu den Verbindungsstegteilen (22) konvergierende Flanken (31) aufweist, die sich über die gesamte Höhe (T) der Ausnehmungsränder (9,11) und vorzugsweise über die gesamte Höhe(H) des Längs-Mittelteils (12) erstrecken.

7. Behälter nach Anspruch 6,
**dadurch gekennzeichnet,**
daß die Flanken durch Schrägflächen (31) gebildet sind, die mit der vertikalen Längs-Mittelebene (Ev) einen Winkel (w) von vorzugsweise 30°, 45° oder 60° oder etwa 30° bis 60° einschließen.

8. Behälter nach einem oder mehreren der Ansprüche 1 bis 7,
**dadurch gekennzeichnet,**
daß die Verbindungsstegteile (21,22) zwischen ihren Flanken (23,31) parallel zur vertikalen Längs-Mittelebene (Ev) des Fertigbauteils (2) verlaufende Stegflächen (32) aufweisen.

9. Fertigbauteil nach einem oder mehreren der Ansprüche 1 bis 8,
**dadurch gekennzeichnet,**
daß es bezüglich seiner vertikalen Längs-Mittelebene (Ev) spiegelsymmetrisch geformt ist.

10. Fertigbauteil nach wenigstens einem der Ansprüche 1 bis 9,
**dadurch gekennzeichnet,**
daß es bezüglich seiner horizontalen Längs-Mittelachse (13) spiegelsymmetrisch ausgebildet ist.

11. Fertigbauteil nach einem oder mehreren der Ansprüche 1 bis 10,
**dadurch gekennzeichnet,**
daß die Höhe (h1) des Verbindungsstegs (14) und der Verbindungsstegteile (21,22) etwa der halben Höhe (H) des Fertigbauteils (2, 3) entspricht oder etwas größer bemessen ist.

12. Fertigbauteil nach einem oder mehreren der Ansprüche 1 bis 11,
**dadurch gekennzeichnet,**
daß es aus Kunststoff, insbesondere durch Recycling wiederverwendbarem Altkunstoff, Beton oder Holz besteht.

13. Fertigbauteil nach Anspruch 12,
**dadurch gekennzeichnet,**
daß es ein Spritzformteil ist.

14. Fertigbauteil nach Anspruch 12,
**dadurch gekennzeichnet,**
daß es ein Preßformteil ist.

## Claims

1. Container, optionally with a base and a lid, in particular a compost container, consisting of a plurality of horizontal panel-shaped finished parts, which comprise in the end region in each case two recesses extending in each case from the same narrow side surface, extend approximately at right angles to the longitudinal axis of the finished part, pass from its inner surface to its outer surface, and are delimited on their vertical sides facing one another by means of a longitudinal central section of the finished part and on their vertical sides turned away from each other by means of hooked bars, and the depth of which is defined by means of connecting bars joining the hooked bars to the longitudinal central section, and the width of which is so great that the finished part can be inserted in a comb-like manner in each case by means of a recess in the associated recess of a transverse finished part of the container structure which is adjacent at the top or at the bottom, wherein there are preferably disposed, alternately in the peripheral direction on the upper and lower peripheral edges of the container a first type of finished part with recesses extending from the upper and lower narrow side surfaces and a second type of finished part with recesses extending from the upper or lower narrow side surface, characterised in that, in each case, connecting bar parts (21, 22) extending preferably over the entire height (h1) of the connecting bar (14) and of which the thickness (d) is less than the thickness (D) of the connecting bar (14), are disposed between the connecting bar (14) and the longitudinal central section (12) on the one hand and between the connecting bar (14) and the hooked bar (15) on the other hand.

2. Container according to Claim 1, characterised in that the connecting bar parts (21, 22) are formed by means of converging flanks (23) of the connecting bar (14) which face the said parts.

3. Container according to Claim 2, characterised in that the flanks (23) of the connecting bar (14) which face the connecting bar parts (21, 22) have curvature surfaces (24) in cylindrical segment form or prismatic inclined surfaces (35).

4. Container according to one or more of Claims 1 to 3, characterised in that the thickness (d) of the connecting bar parts (21, 22) is thinner than the thickness (D) of the longitudinal central section (12) and the hooked bar (15).

5. Container according to one or more of Claims 1 to 4, characterised in that the thickness (D) of the connecting bar (14) or the diameter predetermined by the curvature surfaces (24) thereof corresponds to the thickness of the finished part (2, 3).

6. Container according to one or more of Claims 1 to 5, characterised in that the longitudinal central section (12) has at its ends or in the regions of transition to the connecting bar parts (22) converging flanks (31) which extend over the total height (T) of the recess edges (9, 11) and preferably over the total height (H) of the longitudinal central section (12).

7. Container according to Claim 6, characterised in that the flanks are formed by inclined surfaces (31) which form an angle (w) with the vertical longitudinal median plane (Ev) of preferably 30°, 45° or 60° or approximately 30° to 60°.

8. Container according to one or more of Claims 1 to 7, characterised in that the connecting bar parts (21, 22) have bar surfaces (32) extending between their flanks (23, 31) parallel to the vertical longitudinal median plane (Ev) of the finished part (2).

9. Finished part according to one or more of Claims 1 to 8, characterised in that it is shaped mirror-symmetrically relative to its vertical longitudinal median plane (Ev).

10. Finished part according to at least one of Claims 1 to 9, characterised in that it is shaped mirror-symmetrically relative to its horizontal longitudinal central axis (13).

11. Finished part according to one or more of Claims 1 to 10, characterised in that the height (h1) of the connecting bar (14) and of the connecting bar parts (21, 22) corresponds approximately to half the height (H) of the finished part (2, 3) or is somewhat greater.

12. Finished part according to one or more of Claims 1 to 11, characterised in that it consists of plastics material, in particular old plastics material which can be reused by recycling, concrete or wood.

13. Finished part according to Claim 12, characterised in that it is an injection moulded part.

14. Finished part according to Claim 12, characterised in that it is a compression moulded part.

## Revendications

1. Récipient, comportant, le cas échéant, un fond et un couvercle, en particulier un récipient à compost, constitué de plusieurs éléments préfabriqués en forme de planches, disposés horizontalement, qui présentent chacun, dans la zone d'extrémité, deux évidements partant chacun de la même face étroite, dirigés sensiblement perpendiculairement à l'axe longitudinal de l'élément préfabriqué et traversant de sa face intérieure jusqu'à sa face extérieure, évidements qui, sur leur côtés verticaux situés l'un vers l'autre, sont limités par une partie centrale allongée, de l'élément préfabriqué, et qui, sur leur côtés verticaux situés du côté opposé, sont limités par des barres formant crochets, et dont la profondeur est limitée par l'entretoise de liaison reliant les barres formant crochets avec la partie centrale allongée, et dont la largeur est dimensionnée assez grande pour que l'élément préfabriqué, avec chaque fois son évidement, puisse être enfoncé, à la façon d'un peigne, dans l'évidement associé d'un élément préfabriqué voisin du récipient assemblé, disposé en travers et situé au-dessus ou au-dessous,
étant entendu que, sur la bordure périphérique supérieure ou inférieure du récipient, sont, de préférence, disposés alternativement suivant la direction périphérique, une première sorte d'éléments préfabriqués comportant des évidements partant des faces latérales étroites supérieures ou inférieures et une deuxième sorte d'éléments préfabriqués comportant des évidements partant des faces latérales étroites supérieures ou inférieures,
caractérisé en ce que
des parties d'entretoises de liaison (21, 22), s'étendant, de préférence, sur la totalité de la hauteur (h1) de l'entretoise de liaison (14), sont disposées les unes entre l'entretoise de liaison (14) et la partie centrale allongée (12) d'une part, et les autres entre l'entretoise de liaison (14) et la barre formant crochet (15) d'autre part, l'épaisseur (d) de ces parties d'entretoises de liaison (21, 22) étant plus faible que l'épaisseur (D) de l'entretoise de liaison (14).

2. Récipient suivant la revendication 1, caractérisé en ce que les parties d'entretoises de liaison (21, 22) sont formées par des flancs convergents (23) de l'entretoise de liaison (14), tournés vers elles.

3. Récipient suivant la revendication 2, caractérisé en ce que les flancs (23) de l'entretoise de liaison (14), tournés vers les parties d'entretoises de liaison (21, 22), sont des surfaces courbes de forme cylindrique (24) ou des surfaces à facettes prismatiques inclinées (35).

4. Récipient suivant l'une quelconque ou plusieurs des revendications 1 à 3, caractérisé en ce que l'épaisseur (d) des parties d'entretoises de liaison (21, 22) est plus faible que l'épaisseur (D) de la partie centrale allongée (12) et de la barre de crochet (15).

5. Récipient suivant l'une quelconque ou plusieurs des revendications 1 à 4, caractérisé en ce que l'épaisseur (D) de l'entretoise de liaison (14), ou le diamètre de ses surfaces courbes (24), correspond à l'épaisseur de l'élément préfabriqué (2, 3).

6. Récipient suivant l'une quelconque ou plusieurs des revendications 1 à 5, caractérisé en ce que la partie centrale allongée (12) présente à ses extrémités, ou dans les zones de transition vers les parties d'entretoises de liaison (22), des flancs convergents (31), qui s'étendent sur toute la hauteur (T) des bords (9, 11) des évidements et, de préférence, sur toute la hauteur (H) de la partie centrale allongée (12).

7. Récipient suivant la revendication 6, caractérisé en ce que les flancs sont formés par des facettes inclinées (31), qui, avec le plan vertical longitudinal médian (Ev), forment un angle (w) de préférence de 30°, 45° ou 60°, ou d'environ 30° à 60°.

8. Récipient suivant l'une quelconque ou plusieurs des revendications 1 à 7, caractérisé en ce que les parties d'entretoises de liaison (21, 22) présentent, entre leurs flancs (23, 31), des surfaces d'entretoise (32) dirigées parallèlement au plan vertical médian (Ev) de l'élément préfabriqué (2).

9. Elément préfabriqué suivant l'une quelconque ou plusieurs des revendications 1 à 8, caractérisé en ce que cet élément a une forme symétrique par rapport à son plan vertical longitudinal médian (Ev).

10. Elément préfabriqué suivant au moins l'une quelconque des revendications 1 à 9, caractérisé en ce que cet élément à une forme symétrique par rapport à son axe horizontal longitudinal médian (13).

11. Elément préfabriqué suivant l'une quelconque ou plusieurs des revendications 1 à 10, caractérisé en ce que la hauteur (h1) de l'entretoise de liaison (14) et des parties d'entretoises de liaison (21, 22) est sensiblement la moitié de la hauteur (H) de l'élément préfabriqué (2, 3) ou a une dimension un peu plus grande.

12. Elément préfabriqué suivant l'une quelconque ou plusieurs des revendications 1 à 11, caractérisé en ce que cet élément est constitué de matière plastique, en particulier de matière plastique récupérée réutilisable par recyclage, de béton ou de bois.

13. Elément préfabriqué suivant la revendication 12, caractérisé en ce que cet élément est une pièce moulée par injection.

14. Elément préfabriqué suivant la revendication 12, caractérisé en ce que cet élément est une pièce moulée sous pression.
